# EUROPEAN PATENT APPLICATION

(11) **EP 4 624 934 A1**
(43) Date of publication of application: **01.10.2025**
(21) Application number: 23909843.7
(22) Date of filing: 24.11.2023
(51) Int. Cl.: G01N 35/02, G01N 35/00

(54) **AUTOMATIC SAMPLE ANALYSIS APPARATUS**

(30) Priority: 29.12.2022 CN 202211711869; 29.12.2022 CN 202223554132 U
(71) Applicant: Shenzhen Increcare Biotech Co., Ltd, Shenzhen, Guangdong 518055 (CN)
(72) Inventor: HE, Chongdong, Dongguan, Guangdong 523808 (CN); ZHANG, Zhen, Dongguan, Guangdong 523808 (CN); HE, Taiyun, Dongguan, Guangdong 523808 (CN); YAO, Yanyi, Dongguan, Guangdong 523808 (CN); LIU, Qilin, Dongguan, Guangdong 523808 (CN); YU, Huaibo, Dongguan, Guangdong 523808 (CN)
(74) Representative: Novagraaf Technologies
(86) International application number: PCT/CN2023/134132
(87) International publication number: WO 2024/139912

(57) **Abstract**

An automatic sample analysis apparatus. The automatic sample analysis apparatus includes: a sample addition disc (50), and a sample unit (60), a reaction cup feeding unit (70), a reagent unit (80) and a gripper unit (90) respectively arranged around the sample addition disc (50), wherein the gripper unit (90) includes at least two linear grippers (20) and a guide rail (10), and the at least two linear grippers (20) move linearly along the guide rail (10); and the automatic sample analysis apparatus further includes an incubation unit (100), a photometric unit (200) and a cleaning unit (300), and the incubation unit (100), the photometric unit (200) and the cleaning unit (300) are all located on a motion trajectory of the gripper unit (90), which at least solves the problem of low test efficiency of sample analysis apparatus in the related art.

## Description

The present invention claims priority to Patent Application No. 202211711869.8 and entitled "Automatic Sample Analysis apparatus", and Patent Application No. 202223554132.8 and entitled "Movable Incubation Assembly", which were filed to the China National Intellectual Property Administration on December 29, 2022.

### Technical Field

The present invention relates to the field of medical testing equipment, and in particular, to an automatic sample analysis apparatus.

### Background

A chemiluminescence immunoassay system uses the principles of chemiluminescence and immunoreaction to correlate an optical signal with the concentration of a substance to be tested, for analyzing the content of the substance to be tested in a sample. The system is gaining increasingly widespread applications due to its characteristics such as high sensitivity and specificity and wide linear range. As the number of test specimens increases, clinical laboratories have increasingly high demand for the volume and test throughput (throughput per unit area) of the chemiluminescence immunoassay systems. However, the chemiluminescence immunoassay system needs to achieve functions such as sample conveying, reagent storage, discharge of liquids for analysis such as sample reagent, transfer of a reactor, and cleaning and separation, and has very high requirements for automatic control.

The current test throughput of an immunoassay analyzer may not meet the increasing volume of tests in the related art, thereby seriously affecting the working efficiency of users, such as doctors, who need to perform diagnosis according to a sample test result. Moreover, the existing sample analysis apparatus mainly have the following problems: low test speed and low efficiency; and complex instrument structure, large volume size, and low speed. In order to increase the test speed, multiple analysis apparatus are typically networked, resulting in a large footprint of the networked analysis apparatus.

### Summary

Multiple embodiments of the present invention provide an automatic sample analysis apparatus, so as to at least solve the problem of low test efficiency of sample analysis apparatus in the related art.

In some embodiments of the present invention, provided is an automatic sample analysis apparatus, including: a sample addition disc, and a sample unit, a reaction cup feeding unit, a reagent unit and a gripper unit respectively arranged around the sample addition disc, wherein the gripper unit includes at least two linear grippers and a guide rail, and the at least two linear grippers move linearly along the guide rail; and the automatic sample analysis apparatus further includes an incubation unit, a photometric unit and a cleaning unit, and the incubation unit, the photometric unit and the cleaning unit are all located on a motion trajectory of the gripper unit.

In some embodiments of the present invention, the photometric unit is located between the incubation unit and the cleaning unit.

In some embodiments of the present invention, the sample addition disc is located on the motion trajectory of the gripper unit.

In some embodiments of the present invention, the sample addition disc has a plurality of cup positions, and the plurality of cup positions are arranged at intervals around an axial direction of the sample addition disc; and the sample unit, the reaction cup feeding unit, the reagent unit and the gripper unit respectively cooperate with different cup positions on the sample addition disc.

In some embodiments of the present invention, the sample unit includes a sample needle system, and the sample needle system is located upstream of the reaction cup feeding unit in a rotation direction of the sample addition disc; and in the rotation direction of the sample addition disc, the position where the sample needle system cooperates with the sample addition disc is located downstream of the position where the reaction cup feeding unit cooperates with the sample addition disc.

In some embodiments of the present invention, the gripper unit is located above the incubation unit in a vertical direction; and in the rotation direction of the sample addition disc, the position where the gripper unit cooperates with the sample addition disc is located downstream of the position where the reagent unit cooperates with the sample addition disc.

In some embodiments of the present invention, the two linear grippers are able to transfer a reaction cup between any two of the sample addition disc, the incubation unit, the photometric unit and the cleaning unit.

In some embodiments of the present invention, the reagent unit is located downstream of the reaction cup feeding unit, and in the rotation direction of the sample addition disc, the position where the reagent unit cooperates with the sample addition disc is located downstream of the position where the sample unit cooperates with the sample addition disc.

In some embodiments of the present invention, the reagent unit includes reagent discs and reagent needles cooperating with each other, where the number of reagent discs and the number of reagent needles are both two, and the reagent discs and the reagent needles are in one-to-one correspondence; the two reagent discs are symmetrically arranged with respect to the sample addition disc, and the two reagent needles are symmetrically arranged with respect to the sample addition disc; and the reagent needles move between the reagent discs and the sample addition disc, and the two reagent needles alternately match the same cup position of the sample addition disc.

In some embodiments of the present invention, the automatic sample analysis apparatus further includes a dilution device, and the dilution device is located on a motion trajectory of the sample needle system.

In some embodiments of the present invention, the dilution device is located on the motion trajectory of the gripper unit.

In some embodiments of the present invention, the dilution device is movable between the sample needle system and the gripper unit, and respectively cooperates with the sample needle system and the gripper unit.

In some embodiments of the present invention, the reaction cup feeding unit includes: a reaction cup feed bin; a transfer disc, wherein the transfer disc is connected to the reaction cup feed bin, and the reaction cup feed bin conveys a reaction cup to the transfer disc; and a feeding gripper, the feeding gripper moving between the transfer disc and the sample addition disc.

In some embodiments of the present invention, the incubation unit is able to move along a direction perpendicular to the motion trajectory of the gripper unit.

In some embodiments of the present invention, the automatic sample analysis apparatus further includes a sample scheduling system and a transmission track, wherein the transmission track is connected to the sample scheduling system, and the transmission track is configured for conveying a sample of the sample scheduling system; and the sample unit includes a sample needle system, and the sample needle system moves between the transmission track and the sample addition disc and is configured for conveying a sample.

In some embodiments of the present invention, the incubation unit includes an incubation driving assembly and a movable incubation assembly; the movable incubation assembly is connected to a moving block of the incubation driving assembly, and drives, by the moving block, the movable incubation assembly to move in a preset direction; and the movable incubation assembly includes: a carrying structure, where the carrying structure has a plurality of incubation positions, and each of the plurality of incubation positions is configured for placing a reaction container; a first main control board, where the first main control board is configured for being connected to the moving block or the carrying structure, such that the first main control board moves together with the moving block or the carrying structure along the preset direction; a second main control board, the second main control board being connected to the incubation driving assembly; and an FPC electrical connection structure, two ends of the FPC electrical connection structure being electrically connected to the first main control board and the second main control board, respectively.

In some embodiments of the present invention, the movable incubation assembly includes: a heating structure, where the heating structure is connected to the carrying structure and configured to heat the reaction container at each of the plurality of incubation positions, and the heating structure is electrically connected to the first main control board, and the second main control board is electrically connected to an external power supply.

In some embodiments of the present invention, the heating structure is located on a bottom surface of the carrying structure; and the heating structure is located on an outer peripheral surface of the carrying structure.

In some embodiments of the present invention, the first main control board and the second main control board are located at the same side of the carrying structure.

In some embodiments of the present invention, the movable incubation assembly further includes: a first mounting plate, where the first mounting plate is configured for being connected to the moving block, the first mounting plate has a first support surface, and the first main control board is provided on the first support surface; and a second mounting plate, where the second mounting plate is configured for being connected to the incubation driving assembly, the second mounting plate has a second support surface, and the second main control board is provided on the second support surface.

By applying the technical solutions in the present invention, the automatic sample analysis apparatus of the present invention includes: a sample addition disc, and a sample unit, a reaction cup feeding unit, a reagent unit and a gripper unit respectively arranged around the sample addition disc, wherein the gripper unit includes at least two linear grippers and a guide rail, and the at least two linear grippers move linearly along the guide rail; and the automatic sample analysis apparatus further includes an incubation unit, a photometric unit and a cleaning unit, and the incubation unit, the photometric unit and the cleaning unit are all located on a motion trajectory of the gripper unit.

When the automatic sample analysis apparatus according to the present invention is used, due to the existence of the sample addition disc, the rotation of the sample addition disc is able to allow for cooperation with the sample unit, the reaction cup feeding unit, the reagent unit, and the gripper unit, respectively. During the rotation of the sample addition disc, the reaction cup feeding unit is able to place a reaction cup on the sample addition disc by cooperating with the sample addition disc; then, as the sample addition disc continues to rotate, the sample unit is able to add a sample to the reaction cup, and then the reagent unit is able to add a reagent to the reaction cup into which the sample has been added; and finally, with the rotation of the sample addition disc, the gripper unit is able to pick up the reaction cup added with the reagent, and operations such as incubation, photometry and cleaning are performed in the incubation unit, the photometric unit and the cleaning unit, respectively. Therefore, the automatic sample analysis apparatus in the present invention solves the problem of coordination among a plurality of units and components by the design of coordinated control of the sample addition disc and the two linear grippers; and the design of the double linear grippers and the incubation block solves the problems of complex structures of grippers and incubation discs in the related art, such that the structure and layout of the analysis apparatus are more compact, and the size of the whole machine is smaller, thereby improving the test throughput and test speed per unit footprint of an instrument.

### Brief Description of the Drawings

The drawings of the description, constituting a part of the present invention, are used for providing further understanding of the present invention, and the illustrative embodiments of the present invention and illustrations thereof are used for explaining the present invention, rather than constitute inappropriate limitation on the present invention. In the drawings:
Fig. 1 shows a schematic structural diagram of an automatic sample analysis apparatus according to an embodiment of the present invention;
Fig. 2 shows a schematic structural diagram of a gripper unit of an automatic sample analysis apparatus in an embodiment of the present invention;
Fig. 3 shows a schematic structural diagram of an analysis module according to an embodiment of the present invention;
Fig. 4 shows a schematic diagram of the positional relationship between a double gripper assembly and an incubation unit of the analysis module in Fig. 3;
Fig. 5 shows a timing diagram of coordinated motion of an incubation unit, and a first gripper and a second gripper of a double gripper assembly within a unit time in an embodiment of the present invention;
Fig. 6 shows a schematic diagram of a dilution device according to an embodiment of the present invention;
Fig. 7 shows a schematic structural diagram from a side view of the dilution device of Fig. 6;
Fig. 8 shows a schematic structural diagram from a top view of the dilution device of Fig. 6;
Fig. 9 shows a flowchart of a dilution method of a dilution device according to an embodiment of the present invention;
Fig. 10 is a schematic diagram of a three-dimensional structural of an incubation block driving device provided according to the present invention;
Fig. 11 is an enlarged view of A in Fig. 10;
Fig. 12 is an enlarged view of B in Fig. 10;
Fig. 13 is a schematic diagram of a mounting structure of a driven pulley provided according to the present invention;
Fig. 14 shows a schematic structural diagram in which a movable incubation assembly is mounted on an incubation driving assembly according to an embodiment of the present invention;
Fig. 15 shows a schematic diagram of a partial structure of the movable incubation assembly of Fig. 14; and
Fig. 16 shows a schematic structural diagram of a second carrying plate of a carrying structure of the movable incubation assembly of Fig. 15.

The figures above include the following reference signs:
10. Guide rail assembly; 11. Mounting plate; 12. Guide rail body; 20. Linear gripper; 30. Driving assembly; 31. Driving motor; 32. Synchronous belt structure; 40. Detection assembly; 50. Sample addition disc; 60. Sample unit; 61. Sample scheduling system; 62. Transmission track; 63. Sample needle system; 70. Reaction cup feeding unit; 71. Reaction cup feed bin; 72. Transfer disc; 73. Feeding gripper; 80. Reagent unit; 81. Reagent disc; 82. Reagent needle; 90. Gripper unit; 100. Incubation unit; 110. Reaction incubation region; 120. Substrate incubation region; 130. Incubation driving assembly; 140. Incubation block; 200. Photometric unit; 300. Cleaning unit; 400. Dilution device; 410. Carrying mechanism; 411. Rotary disc; 420. Conveying mechanism; 421. Reaction cup holder; 4211. Reaction cup well; 422. Guide sliding rail; 423. Liquid baffle; 424. Belt drive structure; 4241. Second belt; 430. Sample addition mechanism; 431. Sample addition needle; 432. Rotating structure; 4321. First rotating wheel; 4322. Second rotating wheel; 4323. First belt; 4324. Rotating rod; 433. Connecting arm; 440. Cleaning pool; 510. Mounting table; 5110. First sliding member; 5120. Elongated hole; 5130. Support base; 520. Movable member; 5210. Main body portion; 5221. Second sliding member; 5220. Connecting portion; 5310. Driving member; 5320. Synchronous belt; 5330. Driven pulley; 5331. Protruding tooth; 540. Blocking piece; 5410. First protruding structure; 5420. Second protruding structure; 550. Mounting frame; 560. First sensor; 570. Second sensor; 580. Encoder; 590. Gear sensor;
610. Carrying structure; 611. First sub-carrying plate; 6111. Vent groove; 612. Second sub-carrying plate; 6121. Plate body; 61211. Assembling post; 61212. Assembling hole; 6122. Enclosure plate; 6123. Support rib plate;
620. First main control board; 630. Second main control board; 640. FPC electrical connection structure; 650. First mounting plate; 660. Heating structure; 670. Second mounting plate; 6100. Limiting hole; 6101. Communicating hole;
680. Housing;
690. Fastener.

### Detailed Description of the Embodiments

It is to be noted that embodiments in the present invention and features in the embodiments may be combined with one another without conflicts. Hereinafter, the present invention is described in detail with reference to the accompanying drawings and in conjunction with the embodiments.

In order to at least solve the problem of low test efficiency of sample analysis apparatus in the related art, the present invention provides an automatic sample analysis apparatus.

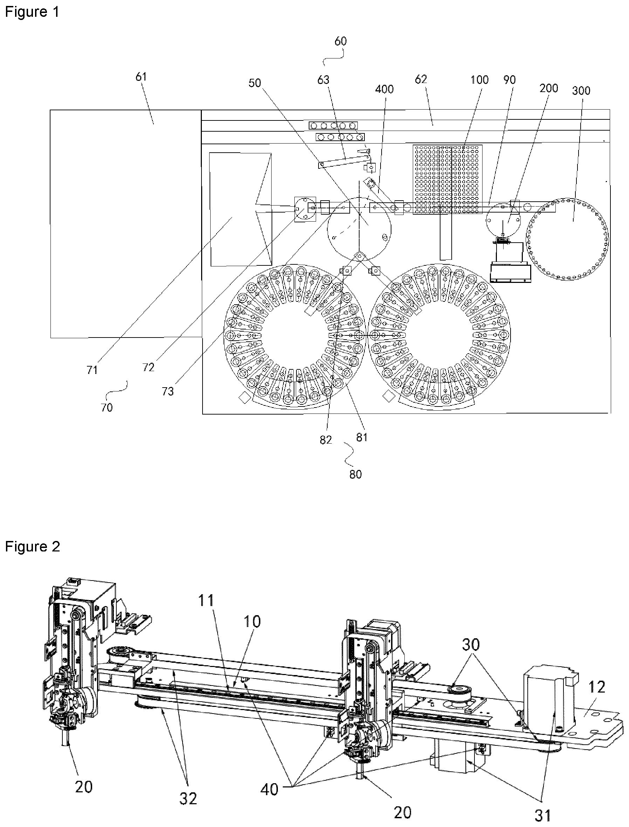

As shown in Fig. 1, the automatic sample analysis apparatus of the present invention includes: a sample addition disc, and a sample unit 60, a reaction cup feeding unit, a reagent unit 80 and a gripper unit respectively arranged around the sample addition disc, wherein the gripper unit includes at least two linear grippers and a guide rail, and the at least two linear grippers move linearly along the guide rail; and the automatic sample analysis apparatus further includes an incubation unit, a photometric unit and a cleaning unit, and the incubation unit, the photometric unit and the cleaning unit are all located on a motion trajectory of the gripper unit.

When the automatic sample analysis apparatus according to the present invention is used, due to the existence of the sample addition disc, the rotation of the sample addition disc is able to allow for cooperation with the sample unit 60, the reaction cup feeding unit, the reagent unit 80, and the gripper unit, respectively. During the rotation of the sample addition disc, the reaction cup feeding unit is able to place a reaction cup on the sample addition disc by cooperating with the sample addition disc; then, as the sample addition disc continues to rotate, the sample unit 60 is able to add a sample to the reaction cup, and then the reagent unit 80 is able to add a reagent to the reaction cup into which the sample has been added; and finally, with the rotation of the sample addition disc, the gripper unit is able to pick up the reaction cup added with the reagent, and operations such as incubation, photometry and cleaning are performed in the incubation unit, the photometric unit and the cleaning unit, respectively. Therefore, the automatic sample analysis apparatus in the present invention effectively increases the test speed and test throughput, and improves the test convenience and efficiency.

In an embodiment, the photometric unit is located between the incubation unit and the cleaning unit. By such an arrangement, a motion route of the linear grippers is able to be effectively optimized, and a motion stroke of the linear grippers is able to be shortened, thereby improving the sample test efficiency.

In an embodiment, the sample addition disc is located on the motion trajectory of the gripper unit. By such an arrangement, it can be ensured that the gripper unit is able to more easily operate the reaction cup on the sample addition disc.

In an embodiment, the sample unit 60 and the reagent unit 80 each have at least one cleaning pool.

In an embodiment, the sample addition disc has a plurality of cup positions, and the plurality of cup positions are arranged at intervals around an axial direction of the sample addition disc; and the sample unit 60, the reaction cup feeding unit, the reagent unit 80 and the gripper unit respectively cooperate with different cup positions on the sample addition disc. Furthermore, in the present invention, the motion periods of the sample unit 60, the reaction cup feeding unit, and the reagent unit 80 are the same as the length of time taken to rotate the sample addition disc by a distance between two cup positions. That is to say, in the present invention, every time the sample addition disc rotates by an interval length between two cup positions, the reaction cup feeding unit is able to provide a reaction cup to the sample addition disc, the sample needle is able to provide a sample once to an empty reaction cup on the sample addition disc, and the reagent needle 82 is able to add a reagent once to the reaction cup into which the sample has been added. Furthermore, in the present invention, the sample addition disc may be separately provided with one or more uniform-mixing working positions where one or more mixers are provided; wherein the uniform-mixing working positions may be provided downstream of a sample addition cup position of the reagent needle 82, such that the sample addition disc rotates to a next position after sample addition, to achieve uniform mixing of a reaction liquid. In an embodiment, the uniform-mixing working positions may be arranged upstream of the gripper unit, and after the reaction liquid is uniformly mixed, the sample addition disc rotates to the trajectory of the gripper unit for next-step operation.

In an embodiment, the sample unit 60 includes a sample needle system 63, and the sample needle system 63 is located upstream of the reaction cup feeding unit in a rotation direction of the sample addition disc; and in the rotation direction of the sample addition disc, the position where the sample needle system 63 cooperates with the sample addition disc is located downstream of the position where the reaction cup feeding unit cooperates with the sample addition disc. In an embodiment, the automatic sample analysis apparatus further includes a sample scheduling system 61 and a transmission track 62, wherein the transmission track is connected to the sample scheduling system, and the transmission track is configured for conveying a sample of the sample scheduling system, and the sample needle system 63 moves between the transmission track and the sample addition disc and is configured for conveying a sample. In an embodiment of the present invention, the sample needle system 63 includes a sample needle body and a sample needle driving assembly. The sample needle body has a sample conveying section; and the sample needle driving assembly is in drive connection with the sample needle body. In the present invention, the sample needle driving assembly is able to drive the sample needle body to move along an arc-shaped trajectory, such that a sample on the transmission track is able to be aspirated and dispensed into a sample cup of the sample addition disc. At the same time, positions such as special sample aspiration position, dilution position may also be provided on a motion path of the sample needle body for sample aspiration.

In an embodiment, the gripper unit is located above the incubation unit in a vertical direction; and in the rotation direction of the sample addition disc, the position where the gripper unit cooperates with the sample addition disc is located downstream of the position where the reagent unit 80 cooperates with the sample addition disc.

In an embodiment, the two linear grippers is able to transfer a reaction cup between any two of the sample addition disc, the incubation unit, the photometric unit and the cleaning unit.

In an embodiment, the reagent unit 80 is located downstream of the reaction cup feeding unit, and in the rotation direction of the sample addition disc, the position where the reagent unit 80 cooperates with the sample addition disc is located downstream of the position where the sample unit 60 cooperates with the sample addition disc.

In an embodiment of the present invention, the reagent unit 80 includes reagent discs 81 and reagent needles cooperating with each other, wherein the number of reagent discs 81 and the number of reagent needles are both two, and the reagent discs 81 and the reagent needles are in one-to-one correspondence; the two reagent discs are symmetrically arranged with respect to the sample addition disc, and the two reagent needles are symmetrically arranged with respect to the sample addition disc; and the reagent needles move between the reagent discs 81 and the sample addition disc, and the two reagent needles alternately match the sample addition disc, and is able to move to the same cup position for liquid discharge of reagent. In the present embodiment, the reagent disc 81 is configured for storing kits, and has functions of kit scheduling, uniform mixing of kit, refrigeration of reagent, and scanning or reading reagent barcode information of kit. Moreover, the reagent needle is able to discharge the reagent in the reagent disc 81 into the reaction cup on the sample addition disc. In addition, by configuring alternate use of the two reagent needles and two reagent discs 81, the test speed is able to be effectively increased. Of course, in the present embodiment, the reagent unit 80 has a driving structure for driving the reagent needle to move.

In an embodiment, the automatic sample analysis apparatus further includes a dilution device 400, and the dilution device is located on a motion trajectory of the sample needle system 63. And the dilution device is located on the motion trajectory of the gripper unit. In addition, the dilution device is movable between the sample needle system 63 and the gripper unit, and respectively cooperates with the sample needle system 63 and the gripper unit. In an embodiment of the present invention, at least a part of the dilution device moves between the sample unit 60 and the gripper unit. In the present invention, the provision of the dilution device is able to solve the problem of the efficiency of a plurality of dilution items for the same sample. The dilution device is configured for specially performing a dilution operation on a sample, and the dilution device is able to realize one sample dilution and multiple sample aspiration, without the need to dilute the sample for each dilution item, and in this way, not only is able to the test efficiency of the dilution items be increased, but also consumables, such as reaction cups and a dilution liquids, may also be saved. The dilution device is a linear driving structure, and one or more reaction cup wells are mounted on the dilution device, such that the reaction cup moves from the trajectory of the gripper unit to a motion trajectory of the sample unit 60. In another embodiment, a dilution cup-disposal position may also be provided beside the dilution device, for disposing the reaction cup after dilution use.

In an embodiment, the reaction cup feeding unit 70 includes a reaction cup feed bin 71, a transfer disc 72 and a feeding gripper 73. The transfer disc is connected to the reaction cup feed bin, and the reaction cup feed bin conveys a reaction cup to the transfer disc; and the feeding gripper moves between the transfer disc and the sample addition disc. In the present invention, the reaction cup in the reaction cup feed bin is able to be conveyed to the transfer disc by the cooperation of a feeding hopper and a feeding slideway, and the reaction cup on the transfer disc is grabbed to the sample addition disc by the feeding gripper.

In an embodiment, the incubation unit is able to move along a direction perpendicular to the motion trajectory of the gripper unit. In the present invention, the incubation unit is configured for incubation of a reaction liquid into which the sample and the reagent have been added. The incubation unit has a plurality of incubation wells, which are able to be arranged in an array or a non-array manner. The incubation unit may be of a square structure, and may also be of a circular or other shaped structure. In an embodiment of the present invention, the incubation unit adopts a square structure, and the incubation unit has one-dimensional motion in a horizontal direction. The motion of the incubation unit needs to cooperate with the motion of the gripper unit. The cleaning unit is used to clean off redundant samples and reagent substances in a sample reagent reaction liquid which have not bound to a reaction. The cleaning unit includes portions such as liquid injection of magnetic separation, uniform mixing of magnetic separation, and liquid aspiration of magnetic separation. The photometric unit is configured for measuring the light intensity emitted after a substrate is added into a reaction container. The photometric unit has a photometric device for measuring the light intensity emitted during the reaction.

In an embodiment, in order to allow for a test to be carried out completely, the automatic sample analysis apparatus in the present invention further includes a consumable loading unit and a control unit. The sample scheduling system provides continuous samples to be tested for the test, thereby realizing automatic continuous sample testing, and a sample rack is a carrier for holding samples; the samples are scheduled to the transmission track of the sample unit 60 via the sample scheduling system, and move to designated sample aspiration positions located under a motion trajectory of the sample needle body; and the consumable loading unit is configured for loading consumables such as substrate liquid, cleaning liquid and dilution liquid required for a testing reaction. The control unit is configured to control the actions of respective motion components required for completing the test, and the timing sequence of periodic and cooperative work.

In the present invention, a cup grabbing position where the gripper unit cooperates with the sample addition disc, a cup discharge well of the incubation unit, an operation cup opening of the photometric unit, the cup disposal position, and a magnetic separation operation cup well are all located on a horizontal line, so as to ensure that the gripper unit is able to reach these positions while moving along the trajectory thereof, for scheduling of reaction cups.

In an embodiment of the present invention, the operation flow of the automatic sample analysis apparatus is:
1. The sample scheduling system is provided with a sample rack for samples to be tested, and the sample rack is transferred to a sample aspiration position on the transmission track by the scheduling mechanism.
2. The feeding gripper of the reaction cup feeding unit schedules one reaction cup on the transfer disc to a cup loading position of the sample addition disc, and periodically advances by one cup position, and the reaction cup is transferred to a position where the sample unit 60 cooperates with the sample addition disc.
3. The sample needle body of the sample unit 60 aspirates a certain quantity of sample from the sample aspiration position on the transmission track, and discharges the sample into the reaction cup on the sample addition disc.
4. The reagent unit 80 schedules a kit to be configured for test items to a reagent aspiration port, to facilitate aspiration of the reagent by the reagent needle.
5. The reagent aspiration port of the reagent needle aspirates a certain quantity of reagent, and discharges same into the reaction cup of the sample addition disc.
6. The sample addition disc periodically advances by one cup position, and the reaction cup is transferred to a reaction liquid uniform-mixing position, for uniform mixing of the reaction liquid.
7. The reaction cup is transferred to a position where the sample addition disc cooperates with the gripper unit, and a first gripper of the double linear grippers transfers the reaction cup to an incubation well of the incubation unit, for incubating the reaction liquid.
8. After a period of time, incubation of the reaction liquid is completed. A second gripper of the double linear grippers transfers the reaction cup to a magnetic cleaning device, for a magnetic cleaning operation.
9. After the magnetic cleaning is completed, one case is that the second gripper of the double linear grippers directly transfers the reaction cup to the photometric unit for subsequent photometric operation; and the other case is that the second gripper of the double linear grippers first transfers the reaction cup to the incubation well of the incubation unit, and then perform substrate incubation after cleaning. After a period of time, the incubation of the substrate is completed, and the double linear grippers transfer the reaction cup to the photometric unit, for subsequent photometric operation.
10. The double linear grippers transfer the reaction cup after photometry to the cup disposal position, for cup disposal, thereby completing the whole test.

In the operation flow, if the flow of a two-step method is to be realized, on the basis of the described one-step method, after the magnetic cleaning is completed, the second gripper of the double linear grippers, i.e. the gripper away from the sample addition disc, first transfers the reaction cup to the incubation well of the incubation unit, and in a next period, the first gripper of the double linear grippers transfers the reaction cup on the incubation unit to the position where the sample addition disc cooperates with the gripper unit. As the periodic advance of the sample addition disc, the reaction cup is transferred again to the position where the sample addition disc cooperates with the reagent needle of the reagent unit 80, and a sample addition operation of the reagent is performed in a second step. Subsequent actions are the same as the flow of the one-step test method.

If sample dilution, automatic dilution and multiple dilution procedures are required, on the basis of the described one-step method, after the reaction liquid is mixed uniformly, the reaction cup is transferred to the position where the sample addition disc cooperates with the gripper unit; and the first gripper of the two linear grippers transfers the reaction cup into the reaction cup well of the dilution device. Linear motion of the dilution device transfers the reaction cup under the path of the motion trajectory of the sample needle body. In a next period, the sample needle body moves to a sample aspiration position of the dilution device, for aspirating a diluted sample. The sample needle body is able to move to the same reaction cup at the sample aspiration position of the dilution device for multiple times, for sample aspiration. Subsequent actions are the same as the flow of the one-step test method.

As shown in Fig. 2, in an embodiment of the present invention, the gripper unit 90 includes: a guide rail assembly 10, linear grippers 20, driving assemblies 30 and a detection assembly 40. The guide rail assembly 10 has a plurality of operation regions; there are a plurality of linear grippers 20, and at least one linear gripper 20 is movably arranged in each operation region; there are a plurality of driving assemblies 30, and each driving assembly 30 is respectively in drive connection with at least one different linear gripper 20, such that the linear gripper 20 moves in a corresponding operation region; and the detection assembly 40 is provided on the guide rail assembly 10, and is in signal connection with the driving assemblies 30. Also, in the embodiments described below, the linear grippers 20 are the linear grippers in the described method.

When the gripper unit 90 of the present invention is used, at least one linear gripper 20 is movably provided in each operation region of the guide rail assembly 10, and thus the linear grippers 20 in a plurality of operation regions of the guide rail assembly 10 are able to work at the same time, thereby meeting the requirement of cooperative work of multiple stations. Moreover, the gripper unit 90 of the present invention further includes the detection assembly 40 provided on the guide rail assembly 10, and thus the motion states of the linear grippers 20 in different operation regions are able to be detected by the detection assembly 40, which is able to prevent the linear grippers 20 in two adjacent operation regions from colliding or interfering with each other. Therefore, the gripper unit 90 of the present invention has the advantage of high working efficiency.

In an embodiment, the guide rail assembly 10 includes a mounting plate 11 and a guide rail body 12, and the driving assemblies 30 are provided on the mounting plate 11; and the guide rail body 12 is provided on the mounting plate 11, and the guide rail body 12 has a plurality of operation regions. That is to say, in the present invention, all the linear grippers 20 move on the same rail body 12. In an embodiment of the present invention, the detection assembly 40 may be provided on the mounting plate 11 or the guide rail body 12. In the present invention, by providing the mounting plate 11, not only the gripper unit 90 is able to be conveniently mounted in a preset working region, but also the mounting plate 11 is able to provide mounting positions for the driving assemblies 30 and the detection assembly 40.

In an embodiment of the present invention, the side of two adjacent operation regions close to each other has an intersection region overlapping with each other, the detection assembly 40 includes a plurality of first detection members, and at least one first detection member is arranged in each intersection region, wherein each first detection unit is in signal connection with the driving assemblies 30 corresponding to the linear grippers 20 which correspond to two operation regions corresponding to the intersection region. By such an arrangement, in the present invention, when the linear grippers 20 of two adjacent operation regions move into the same intersection region, the direction of motion and speed of motion of the linear grippers 20 are able to be measured by the first detection member, and the motion of the linear grippers 20 is able to be judged according to the measurement result, and thus the corresponding driving assemblies 30 are controlled to limit the motion of the linear grippers 20, so as to prevent the linear grippers 20 from colliding in the intersection region. Therefore, in the present invention, the stable operation of the gripper unit 90 is able to be effectively ensured by providing the first detection assembly 40. It should be noted that the position where the incubation unit 100 cooperates with the gripper unit 90 is located in the intersection region, thereby ensuring that two linear grippers are able to grab or place the reaction cup from the incubation unit 100.

In an embodiment, all the linear grippers 20 in the intersection regions have the same direction of motion. That is to say, when the linear grippers 20 in two adjacent operation regions both move within the intersection region, in this case, in order to avoid that different linear grippers 20 collide with each other, the driving assemblies 30 may be controlled to limit the directions of motion of the linear grippers 20 in the intersection region, thereby preventing the linear grippers 20 from colliding with each other.

In an embodiment, the detection assembly 40 further includes a plurality of second detection members; at least one second detection member is provided in a part of each operation region not overlapping with an adjacent operation region, and the second detection member is in signal connection with a driving assembly 30 corresponding to a linear gripper 20 in a corresponding operation region. By such an arrangement, the motion states of the linear grippers 20 in different operation regions are able to be detected by the second detection members, thereby ensuring the stable operation of the gripper unit 90.

In an embodiment, each driving assembly 30 includes a driving motor 31 and a synchronous belt structure 32. The driving motor 31 and the synchronous belt structure 32 are respectively provided on the guide rail assembly 10, the driving motor 31 is in drive connection with the synchronous belt structure 32, and the linear gripper 20 is in drive connection with the synchronous belt structure 32 and is able to move along the synchronous belt structure 32. That is to say, in the present invention, the driving motor 31 drives the synchronous belt structure 32 to rotate, such that the linear gripper 20 is driven by the synchronous belt structure 32 to move along the guide rail body 12 of the guide rail assembly 10.

In an embodiment of the present invention, there are two operation regions, two linear grippers 20, and two driving assemblies 30, and the two driving motors 31 and the two synchronous belt structures 32 are respectively located on a top surface and a bottom surface of the guide rail assembly 10. In an embodiment, the two driving motors 31 are located at the same end in a lengthwise direction of the guide rail assembly 10, and are arranged in a staggered manner in the lengthwise direction of the guide rail assembly 10. Moreover, the driving motor 31 and synchronous belt structure 32 of the same driving assembly 30 are located on the top surface and the bottom surface of the guide rail assembly 10, respectively. In an embodiment, extension directions of the two synchronous belt structures 32 are the same. That is to say, in the present invention, the two driving assemblies 30 are provided on the mounting plate 11 of the guide rail assembly 10, and the two driving motors 31 of the two driving assemblies 30 are located at the same end in the lengthwise direction of the mounting plate 11; and one driving motor 31 is located on the top surface of the mounting plate 11, and the other driving motor 31 is located on the bottom surface of the mounting plate 11. Moreover, one of the two synchronous belt structures 32 is located on the top surface of the mounting plate 11, and the other is located on the bottom surface of the mounting plate 11; and the synchronous belt structure 32 located on the top surface of the mounting plate 11 is in drive connection with the driving motor 31 on the bottom surface of the mounting plate 11, and the synchronous belt structure 32 on the bottom surface of the mounting plate 11 is in drive connection with the driving motor 31 on the top surface of the mounting plate 11. In this way, the overall structure of the gripper unit 90 is able to be effectively ensured to be more compact, and it can also be ensured that the two linear grippers 20 are able to move along the same guide rail body 12. Furthermore, since the two driving motors 31 and the two synchronous belt structures 32 are arranged at an interval along the lengthwise direction of the guide rail body 12, there are an overlapping portion and a non-overlapping portion between the two synchronous belt structures 32, and the overlapping portion is the portion of the intersection region of the two operation regions.

In an embodiment, the detection assembly 40 further includes third detection members, wherein at least one third detection member is provided at each of the ends of the two synchronous belt structures 32 away from each other. The first detection members and the second detection members are respectively direction sensors and zero position sensors, and the third detection members are code teeth optocouplers and code discs, for precise position control in a motion process.

In an embodiment of the present invention, in a reset process, the two linear grippers 20 move along the two ends of the guide rail body 12, respectively.

It should be noted that while the linear grippers 20 of the present invention move along the guide rail body 12, the gripper parts thereof also move on the linear grippers 20 along a direction perpendicular to the lengthwise direction of the guide rail body 12.

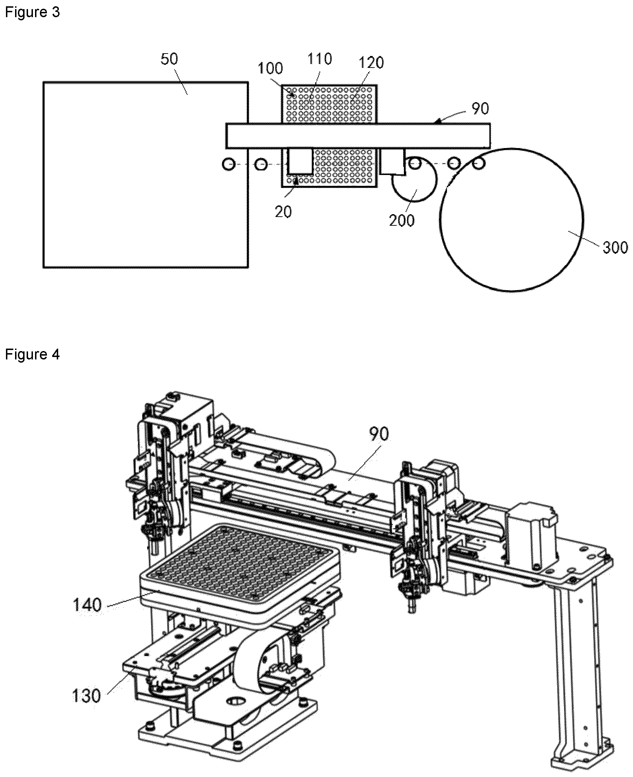

As shown in Fig. 3 and Fig. 4, in the present invention, the sample addition disc 50, the incubation unit 100, the cleaning unit 300, the photometric unit 200 and the gripper unit 90 constitute an analysis module, and the gripper unit 90 is able to transfer a reaction cup from any one of the sample addition disc 50, the incubation unit 100, the cleaning unit 300 and the photometric unit 200; wherein the gripper unit 90 includes a first limiting guide rail, and a first gripper and a second gripper capable of reciprocating along the first limiting guide rail, and both the first gripper and the second gripper are able to transfer a reaction cup to the incubation unit 100. In an embodiment, the first gripper and the second gripper are the linear grippers 20 above.

When the analysis module of the present invention is used, the gripper unit 90 includes the first gripper and the second gripper capable of moving along the first limiting guide rail, and thus different reaction cups are able to be operated simultaneously by the first gripper and the second gripper; or the movement of the same reaction cup at different positions during different time periods is completed by the first gripper and the second gripper, so as to implement operations such as dispensing, uniform mixing, incubation, cleaning, separation, and photometry of sample and reagent. Therefore, by using the analysis module in the present invention, by the motion of the first gripper and the second gripper along the first limiting guide rail, a reaction cup is able to be grabbed or released from the sample addition disc 50, the incubation unit 100, the photometric unit 200 and the cleaning unit 300, so as to complete the measurement and analysis of target analyte contained in a sample to be tested.

It should be noted that in an embodiment of the present invention, the first limiting guide rail is a linear guide rail, and the sample addition disc 50, the incubation unit 100 and the cleaning unit 300 are arranged at intervals along the lengthwise direction of the first limiting guide rail. In addition, in the present invention, the sample addition disc 50 may be a sample and reagent dispensing mechanism such as a sample addition disc, or may be a sample and reagent uniform-mixing mechanism or a sample and reagent dispensing and uniform-mixing mechanism, etc.

In an embodiment, the incubation unit 100 at least includes a reaction incubation region 110 and a substrate incubation region 120. In an embodiment, in the present invention, the first gripper is also able to transfer a reaction cup between at least two of the incubation unit 100, the sample addition disc 50 and the photometric unit 200. The second gripper is also able to transfer a reaction cup between at least two of the incubation unit 100, the cleaning unit 300 and the photometric unit 200. That is to say, the first gripper is able to transfer a reaction cup between the reaction incubation region 110 and the sample addition disc 50, and the second gripper is able to transfer a reaction cup between the substrate incubation region 120 and the cleaning unit 300. And the first gripper is also able to transfer a reaction cup between the substrate incubation region 120 and the sample addition disc 50. At the same time, the second gripper is also able to transfer a reaction cup between the substrate incubation region 120 and the sample addition disc 50. In an embodiment, the second gripper is also able to transfer a reaction cup between the reaction incubation region 110 and the cleaning unit 300. In an embodiment, the first gripper is also able to transfer a reaction cup between the substrate incubation region 120 and the photometric unit 200.

Of course, in the present invention, the motion ranges of the first gripper and the second gripper and the scheduling range of reaction cups may also be changed according to practical use requirements.

Furthermore, the first gripper and the second gripper share the first limiting guide rail in the horizontal direction, and thus they need to have corresponding cooperation action in the horizontal motion process, so as to ensure that working paths of the two grippers do not interfere with each other in an actual cup grabbing process, which causes the two grippers to collide with against each other. In addition, the two grippers operate cooperatively, to increase the overall operation efficiency of the two grippers.

In an embodiment, the first gripper and the second gripper have the same direction of motion on the first limiting guide rail. In another embodiment, on the premise that the first gripper and the second gripper do not collide, the directions of motion of the first gripper and the second gripper may be different.

In an embodiment, the incubation unit 100 includes: an incubation driving assembly 130 and an incubation block 140; wherein the incubation block 140 is provided with a reaction incubation region 110 and a substrate incubation region 120, and the incubation driving assembly 130 is able to drive the incubation block 140 to move relative to the first limiting guide rail in the horizontal direction, such that a target reaction cup of the incubation unit 100 is positioned on a motion trajectory of the double linear gripper assembly. In an embodiment, the incubation driving assembly 130 has a second limiting guide rail, the second limiting guide rail and the first limiting guide rail are perpendicular to each other in the horizontal direction, and the incubation block 140 is able to reciprocate on the second limiting guide rail. In the present embodiment, the incubation driving assembly 130 further includes a driving motor; the driving motor is able to drive the incubation block 140, thereby ensuring that the incubation block 140 is able to move along the second limiting guide rail. Moreover, in the present invention, the incubation block 140 may be a disc-shaped incubation block or a quadrangular incubation block.

In an embodiment, the incubation block 140 is provided with a plurality of reaction cup accommodating wells, and the reaction cup accommodating wells are arranged in a rectangular array on the incubation block 140, and the reaction incubation region 110 is closer to the sample addition disc 50 relative to the substrate incubation region 120, and the substrate incubation region 120 is closer to the cleaning unit 300 relative to the reaction incubation region 110. In another embodiment of the present invention, the plurality of reaction cup accommodating wells may also be arranged in a non-array form.

In an embodiment, the photometric unit 200 is arranged between the incubation unit 100 and the cleaning unit along the lengthwise direction of the first limiting guide rail.

In an embodiment, the incubation unit 100 further includes a heating assembly, wherein the heating assembly is provided on the incubation block 140, and the heating assembly is located below a cup well structure. In an embodiment, the incubation unit 100 further includes a detection assembly, the detection assembly being in signal connection with the heating assembly. In the present invention, the detection assembly may be a temperature sensor. By such an arrangement, the temperature of the incubation unit 100 is able to be measured, thereby ensuring that the incubation unit 100 is within a set temperature range.

It should be noted that in the present invention, the sample addition disc 50, the incubation unit 100, the photometric unit 200 and the cleaning unit 300 are each provided with an operation position for allowing a reaction cup to enter and exit, so as to schedule the reaction cup among different units. Furthermore, in the present invention, both the first gripper and the second gripper are two-dimensional linear grippers, and in the present invention, the first limiting guide rail of the gripper unit 90 is generally arranged in the horizontal direction; therefore, the first gripper and the second gripper are not only able to move along the guide rail, but also able to move in a vertical direction relative to the first limiting guide rail, so as to ensure that the first gripper and the second gripper are able to grab or release a reaction cup. In another embodiment of the present invention, the first limiting guiding rail is replaced by a non-linear driving structure, or the first gripper and the second gripper are replaced by double rocker-arm grippers.

The present invention further provides a scheduling method, and the scheduling method is applied to the described analysis module, and the scheduling method includes: when a reaction incubation operation is performed, the first gripper takes a reaction cup out of the sample addition disc 50 and places same into the reaction incubation region 110 of the incubation unit 100; when a magnetic separation and cleaning operation is performed, the second gripper takes the reaction cup out of the reaction incubation region 110 and places same into the cleaning unit 300; and when a substrate incubation operation is performed, the second gripper takes the reaction cup out of the cleaning unit 300 and places same into the substrate incubation region 120 of the incubation unit 100.

In an embodiment, the scheduling method further includes: after the magnetic separation and cleaning operation is performed and when a reagent in a second step needs to be added, the second gripper takes the reaction cup out of the cleaning unit 300 and places same into the substrate incubation region 120; and then the first gripper takes the reaction cup out of the substrate incubation region 120 and places same into the sample addition disc 50.

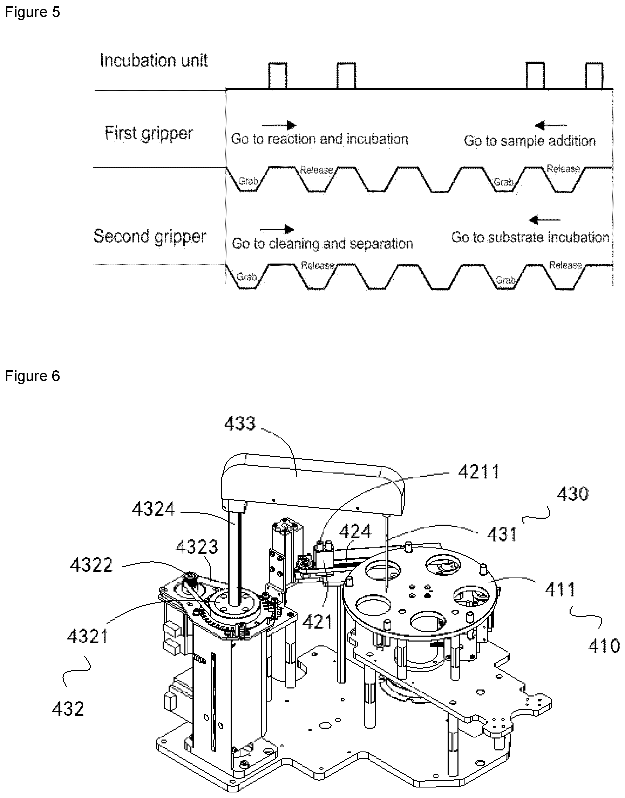

In the embodiment shown in Fig. 5, the first gripper and the second gripper have the same motion direction, the first gripper and the second gripper simultaneously perform lifting and lowering operations, and the scheduling method further includes: when the first gripper takes the reaction cup out of the sample addition disc 50 and places same into the reaction incubation region 110, the second gripper moves synchronously from the reaction incubation region 110 to the cleaning unit 300. In an embodiment, when the first gripper takes the reaction cup out of the incubation unit 100 and places same into the sample addition disc 50, the second gripper synchronously takes the reaction cup out of the cleaning unit 300 and places same into the substrate incubation region 120. In an embodiment, the incubation unit 100 is able to move between the processes of operations in which the first gripper and the second gripper grab and place the reaction cup, so as to prevent the incubation unit 100 from colliding with the first gripper or the second gripper.

By such a design, the motions of the first gripper and the second gripper are able to be separated as far as possible in a period; in addition, by the relay of the two grippers, the reaction cup of the cleaning unit 300 is able to be transferred to a sample and reagent dispensing operation unit. In this way, the efficiency of using two grippers is maximized, and the whole cup grabbing efficiency is increased.

Moreover, when the gripper unit 90 grabs the reaction cup of the incubation unit 100, the incubation unit 100 moves relative to the first limiting guide rail and aligns the reaction cup to be grabbed with the first limiting guide rail; after the first gripper and the second gripper of the gripper unit 90 move to corresponding positions along the first limiting guide rail, one of the first gripper and the second gripper moves towards the incubation unit 100 with respect to the first limiting guide rail and moves away from the incubation unit 100 after grabbing the reaction cup; when the gripper unit 90 places the reaction cup into the incubation unit 100, the incubation unit 100 moves relative to the first limiting guide rail and enables an empty well into which the reaction cup is to be placed to align with the first limiting guide rail, and one of the first gripper and the second gripper moves to a corresponding position along the first limiting guide rail, moves towards the incubation unit 100 relative to the first limiting guide rail and places the reaction cup into the empty well, and finally moves in a direction away from the incubation unit 100 with respect to the first limiting guiding rail. The purpose of such operations is to prevent collision between the incubation unit 100 during movement and the gripper unit 90, and thus after finishing the action of grabbing or releasing the reaction cup, the first gripper or the second gripper needs to move upward in the vertical direction, to avoid the incubation module.

In order to solve the problem in the related art that the double linear grippers are likely to collide during use, the present invention further provides a double linear gripper control method. The double linear gripper control method in the present invention includes: a dynamic collision distance M is set; initial positions and target positions of two linear grippers are acquired; according to given motor motion parameters of the two linear grippers, the shortest distance N during the motion of the two linear grippers is calculated, and the magnitude relationship between the distance M and the shortest distance N is judged; if N≤M, the motor motion parameters of the two linear grippers are adjusted; and if N>M, the two linear grippers continue to move with the current motor motion parameters.

By using the double linear gripper control method in the present invention, the shortest distance N between the two linear grippers and the dynamic collision distance M are judged, and motors of the two linear grippers are controlled, so as to ensure that the shortest distance N between the two linear grippers is always greater than the dynamic collision distance M, which ensures that the two linear grippers will not collide during movement. Therefore, the double linear gripper control method in the present invention realizes intelligent reliable avoidance of the double grippers, such that the advantages of small space, light weight, high speed and large scheduling range required by the layout of the double linear grippers are fully utilized, which increases the flexibility of gripper scheduling, and satisfies the timing control requirements in complex scenarios.

As shown in Figs. 6 to 9, the dilution device includes a carrying mechanism 410, a conveying mechanism 420 and a sample addition mechanism 430, wherein the carrying mechanism 410 has a first accommodating station, and the first accommodating station is configured for placing a reaction cup capable of carrying a sample and a diluent; the conveying mechanism 420 is spaced apart from the carrying mechanism 410, and the conveying mechanism 420 has at least one reaction cup holder 421, and the conveying mechanism 420 has a first temporary storage station and a second temporary storage station, the reaction cup holder 421 is movably arranged between the first temporary storage station and the second temporary storage station, and the reaction cup holder 421 is configured for placing a reaction cup to which a sample and a diluent have been added; and the sample addition mechanism 430 has a sample addition needle 431, and a motion trajectory of the sample addition needle 431 is able to pass through the first accommodating station, and the motion trajectory of the sample addition needle 431 is able to at least pass through the first temporary storage station or the second temporary storage station, such that the sample addition needle 431 adds a sample and/or a diluent into a reaction cup at the first accommodating station.

The dilution device is configured in a structural form including the carrying mechanism 410, the conveying mechanism 420 and the sample addition mechanism 430, and in this way, during the process of diluting the sample, the reaction cup is able to be placed at the first accommodating station of the carrying mechanism 410, and the sample and the diluent are added into the reaction cup, and then the reaction cup is moved from the first temporary storage station to the second temporary storage station by the reaction cup holder 421 on the conveying mechanism 420; At this time, the sample addition mechanism 430 aspirates a preset quantity of mixed liquid from the reaction cup at the second temporary storage station, and adds the mixed liquid into another reaction cup at the first accommodating station, so as to complete one dilution of the sample.

The dilution device provided in the present invention has a relatively simple structure, and has a dilution efficiency higher than that of existing sample analyzers having an automatic dilution function, and does not occupy a long dilution duration, thereby facilitating carrying out of subsequent work.

It should be noted that in the present invention, the sample addition needle 431 aspirates a preset quantity of mixed liquid from the reaction cup at the first temporary storage station or the second temporary storage station.

It should be noted that in the present invention, in an embodiment not shown in the figures of the present invention, the dilution device further includes a transfer mechanism, wherein the transfer mechanism has a grabbing end, and a motion trajectory of the grabbing end at least passes through the first accommodating station and the first temporary storage station, so as to grab the reaction cup at the first accommodating station and place same at the first temporary storage station, or to grab the reaction cup at the first temporary storage station and place same at a position to be placed. In this way, during the process of diluting the sample, the reaction cup is able to be placed at the first accommodating station of the carrying mechanism 410, and the sample and the diluent are added into the reaction cup, and then the reaction cup carrying the sample and the diluent is placed at the first temporary storage station of the conveying mechanism 420 by the transfer mechanism, and the reaction cup is driven to the second temporary storage station by the reaction cup holder 421; and at this time, the sample addition mechanism 430 aspirates a preset quantity of mixed liquid from the reaction cup at the second temporary storage station, and adds the mixed liquid into another reaction cup at the first accommodating station, so as to complete one dilution of the sample.

It should be noted that in the present invention, in the described embodiments, the grabbing end of the transfer mechanism is able to directly grab the reaction cup from the first accommodating station, and the operation is convenient and fast.

It should be noted that in the present invention, in order to prevent the grabbing end from interfering with the sample addition needle 431 in the process of the grabbing end of the transfer mechanism moving to the first accommodating station to grab the reaction cup, as shown in Figs. 6 to 8, the carrying mechanism 410 includes a rotary disc 411, the first accommodating station is arranged on the rotary disc 411, and the rotary disc 411 is further provided with a second accommodating station; and the second accommodating station and the first accommodating station are spaced apart from each other in a circumferential direction of the rotary disc 411; wherein the second accommodating station is configured for transferring the reaction cup, and by rotating the rotary disc 411, the positions of the first accommodating station and the second accommodating station thereon are switched. The dilution device further includes a transfer mechanism, wherein the transfer mechanism has a grabbing end, and a motion trajectory of the grabbing end at least passes through the second accommodating station and the first temporary storage station, so as to grab the reaction cup at the second accommodating station and place same at the first temporary storage station, or to grab the reaction cup at the first temporary storage station and place same at a position to be placed. In this way, it is ensured that the first accommodating station is able to be located on the motion trajectory of the sample addition needle 431, such that the sample addition needle 431 is able to add a sample and/or a diluent into the reaction cup located at the first accommodating station; at the same time, the second accommodating station is located on the motion trajectory of the grabbing end, and when the grabbing end needs to grab the reaction cup on the rotary disc 411, the rotary disc 411 is rotated such that the reaction cup is rotated from the first accommodating station to the second accommodating station; at this time, the grabbing end moves to the second accommodating station to grab the reaction cup, so as to facilitate subsequent transfer of the reaction cup to the first temporary storage station of the conveying mechanism 420. The arrangement of the rotary disc 411 ensures the convenience of switching between the first accommodating station and the second accommodating station.

Of course, in the present invention, there may be one rotary disc 411, or there may be of a plurality of rotary discs, and the plurality of rotary discs 411 are arranged at intervals.

It should be noted that in the present invention, the position to be placed is mainly used for storing reaction cups which have undergone a preset number of dilutions, such that they are able to be directly taken for a higher dilution factor next time, which greatly increases the dilution efficiency of the sample.

It should be noted that in the present invention, the figures do not show a schematic structural diagram of the transfer mechanism. In an embodiment, the motion trajectory of the grabbing end is a linear trajectory, and a connecting line between the second accommodating station and the first temporary storage station is located on the linear trajectory. In this way, it is ensured that the grabbing end is able to move linearly and switch between the first temporary storage station and the second accommodating station, and it is ensured that the grabbing end is able to complete the switching of the reaction cup on the premise of a relatively small movement distance.

In another embodiment, the motion trajectory of the grabbing end is arc-shaped, for example, rocker-arm grippers are used.

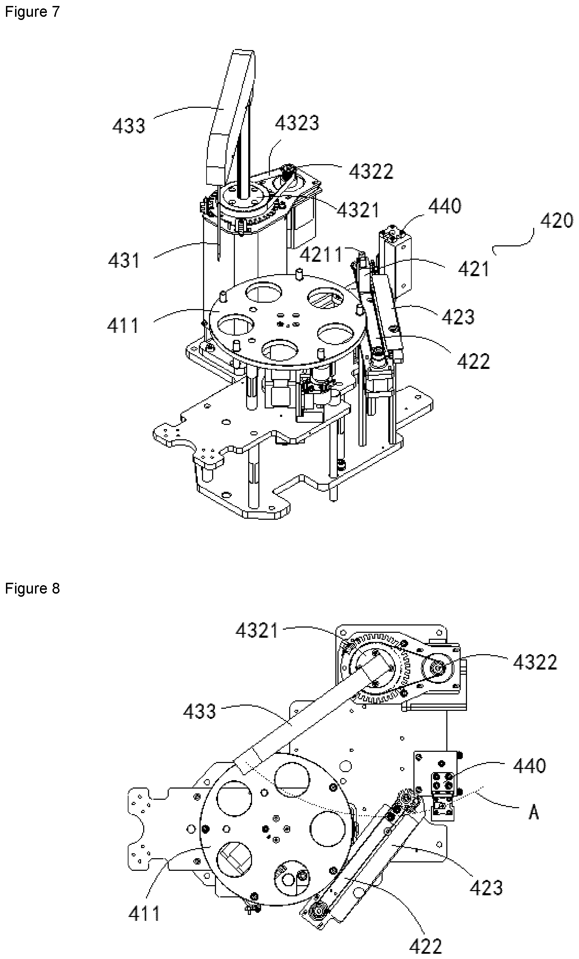

As shown in Fig. 7 and Fig. 8, the conveying mechanism 420 has a guide sliding rail 422, the first temporary storage station and the second temporary storage station are respectively located at two ends of an extension direction of the guide sliding rail 422, and the reaction cup holder 421 is slidably provided on the guide sliding rail 422. In this way, the guide sliding rail 422 achieves the effect of guiding the reaction cup holder 421, and ensures the reliability of the movement of the reaction cup holder 421; at the same time, since the first temporary storage station and the second temporary storage station are respectively located at two ends of the extension direction of the guide sliding rail 422, it is ensured that the first temporary storage station is able to be as close as to the transfer mechanism as possible, and the second temporary storage station is able to be as close to the sample addition mechanism 430 as possible.

In an embodiment, the guide sliding rail 422 extends along a tangential direction of the rotary disc 411 of the carrying mechanism 410.

As shown in Fig. 8, the motion trajectory of the sample addition needle 431 is a circular arc trajectory. The dilution device further includes a washing pool 440, wherein the washing pool 440 is located on the circular arc trajectory, and is configured for washing the sample addition needle 431.

It should be noted that in the present invention, the broken line A in Fig. 8 indicates the motion trajectory of the sample addition needle 431.

As shown in Fig. 8, the motion trajectory of the sample addition needle 431 is a circular arc trajectory, and the first accommodating station and the second temporary storage station are both located on the circular arc trajectory. In this way, the position switching of the sample addition needle 431 between the first accommodating station and the second temporary storage station is able to be realized by rotating, thereby ensuring that the structure of the dilution device is simple and compact enough and does not occupy a large mounting space.

As shown in Fig. 6, the conveying mechanism 420 further includes a driving portion and a liquid baffle 423, wherein the driving portion is in drive connection with the reaction cup holder 421, and the driving portion is spaced apart from the guide sliding rail 422; and the liquid baffle 423 is spaced apart from the guide sliding rail 422, and is located above the driving portion, to block the driving portion. In this way, the liquid baffle 423 achieves the effect of blocking the driving portion, so as to prevent the liquid in the sample addition needle 431 from being splashed onto the driving portion due to the occurence of liquid splashing in the movement of the sample addition needle 431, thereby ensuring the safety of the driving portion.

In an embodiment, as shown in Fig. 6, the driving portion includes a belt drive structure 424, the reaction cup holder 421 is connected to a second belt 4241 of the belt drive structure 424, so as to drive the reaction cup holder 421 to move along the guide sliding rail 422 during the movement of the second belt 4241, thereby ensuring the reliability of the movement of the reaction cup holder 421.

In another embodiment, the driving portion is a disc driving structure.

As shown in Fig. 6 and Fig. 7, the reaction cup holder 421 has at least two reaction cup wells 4211 for accommodating reaction cups. In this way, it is ensured that at least one reaction cup is able to be placed on the same reaction cup holder 421, thereby ensuring the dilution efficiency of the dilution device; In addition, normally, one reaction cup well 4211 is enough, and in special situations, two reaction cup wells 4211 are needed, in which one reaction cup well 4211 of the two reaction cup wells 4211 is normally used, and the other reaction cup well 4211 of the two reaction cup wells 4211 is used for temporary occupation, and the purpose is to ensure the efficiency and speed of the test. When a reaction cup at one reaction cup well 4211 is not transferred away in time, meanwhile a new dilution item needs to be performed, the other reaction cup well 4211 is used to place a reaction cup to be diluted, that is, the other reaction cup well 4211 is a spare reaction cup well 4211.

As shown in Fig. 6 and Fig. 7, the sample addition mechanism 430 has a rotating structure 432 and a connecting arm 433; one end of the connecting arm 433 is connected to the rotating structure 432, and the other end of the connecting arm 433 is connected to the sample addition needle 431. The rotating structure 432 rotates, and drives, by the connecting arm 433, the sample addition needle 431 to move along the circular arc trajectory. In this way, the rotating structure 432 achieves driving reliability of the connecting arm 433, and ensures that the connecting arm 433 is able to drive the sample addition needle 431 to move along a preset path.

In an embodiment, as shown in Figs. 6 to 8, the rotating structure 432 includes a first rotating wheel 4321, a second rotating wheel 4322, a first belt 4323 and a rotating rod 4324; wherein the first belt 4323 is sleeved on the first rotating wheel 4321 and the second rotating wheel 4322, the rotating rod 4324 is connected to the first rotating wheel 4321, the rotating rod 4324 extends along an axial direction of the first rotating wheel 4321, and the connecting arm 433 and the rotating rod 4324 are arranged at an included angle of 90°, such that the connecting arm 433 is able to extend above the accommodating stations of the rotary disc 411.

It should be noted that in an embodiment not shown in the figures of the present invention, the reaction cup holder 421 is provided with a uniform-mixing portion, and the uniform-mixing portion is configured for uniformly mixing the sample and the diluent in the reaction cup on the reaction cup holder 421. In this way, the uniform-mixing portion achieves the effect of uniformly mixing the sample and the diluent in the reaction cup, thereby facilitating the improvement of the dilution performance of the dilution device.

It should be noted that the present invention further provides a dilution method of a dilution device, which is configured for the dilution device described above and below. The dilution method includes the following steps: step S1: the sample addition mechanism 430 adds, by the sample addition needle 431, a sample and/or a diluent into a reaction cup located at the first accommodating station of the carrying mechanism 410; and step S3: the conveying mechanism 420 moves the reaction cup from the first temporary storage station to the second temporary storage station by the reaction cup holder 421 on the conveying mechanism; and step S4: the sample addition needle 431 moves to the second temporary storage station to aspirate a preset quantity of mixed liquid in the reaction cup, and adds the mixed liquid into another reaction cup at the first accommodating station, so as to complete one dilution of the sample.

In an embodiment, after step S1 and before step S3, the dilution method includes: step S2: the transfer mechanism transfers the reaction cup, to which the sample and the diluent have been added, to the reaction cup holder 421 of the conveying mechanism 420, and places same at the first temporary storage station.

In an embodiment, after step S1 and before step S2, the dilution method includes: step S10: by rotating the rotary disc 411 on the carrying mechanism 410, the positions of the first accommodating station and the second accommodating station located on the rotary disc are switched, such that the second accommodating station is rotated to a motion trajectory of the transfer mechanism.

In an embodiment, the dilution method further includes step S5: step S4 is repeated, to complete multiple dilutions of the sample.

It should be noted that if a large dilution factor is required, the dilution method in the present invention further includes step S5: step S1 to step S4 are repeated, to complete multiple dilutions of the sample. For example, if a certain dilution of the sample is able to achieve a 10-fold dilution, then an N-step sample dilution process is able to achieve a maximum of 10^{N}-fold dilution.

In conclusion, the dilution device and dilution method provided by the present invention are able to achieve the test functions of one sample dilution and multiple dilution items, which specifically means that after sample dilution is completed once, the sample addition needle 431 is able to aspirate a liquid from the reaction cup for multiple times for test of multiple items, until the liquid in the reaction cup is insufficient to satisfy (the sample addition quantity tested by the sample addition needle 431 + dead volume quantity).

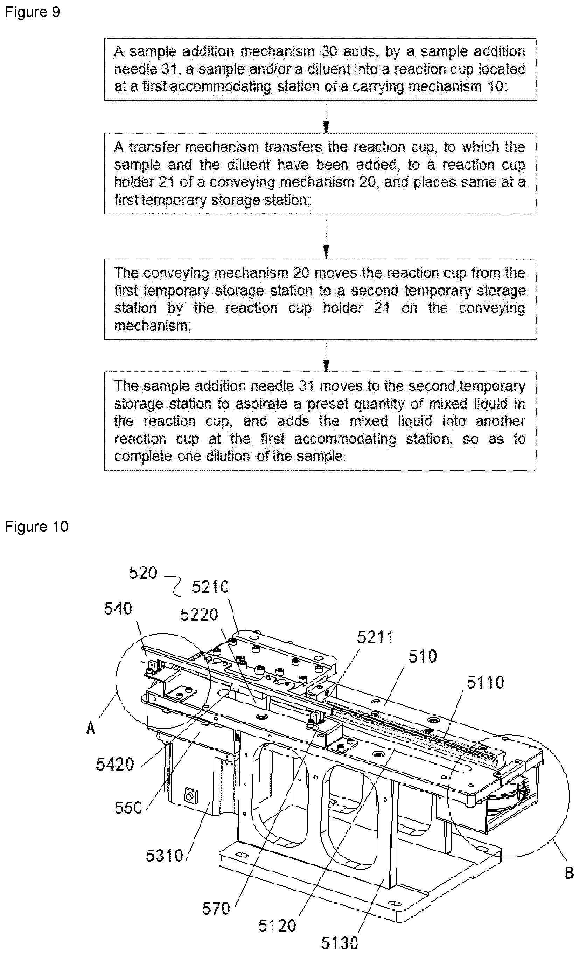

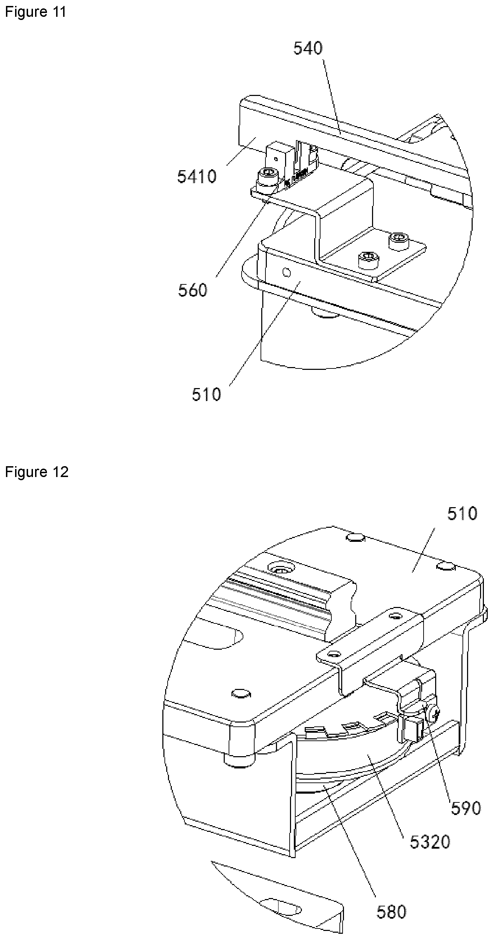

As shown in Figs. 10 to 13, the incubation driving assembly includes a mounting table 510, a movable member 520, a transmission mechanism and a detection assembly; wherein the mounting table 510 is provided with an elongated hole 5120, the movable member 520 is movably mounted on the mounting table 510, and the movable member 520 is configured for mounting the incubation block; the transmission mechanism is mounted on the mounting table 510, at least a part of the movable member 520 passes through the elongated hole 5120 and is connected to the transmission mechanism, and the transmission mechanism drives the movable member 520 to move; and the detection assembly at least includes an inductive portion provided on the movable member 520 and a sensing portion provided on the mounting table 510, wherein the sensing portion is in inductive fit with the inductive portion.

In an embodiment, in the present invention, by the transmission mechanism, the incubation driving assembly drives the movable member 520 to move, and the movable member 520 drives the incubation block to move, so as to achieve the position movement of the incubation block, which allows for convenient grabbing of the incubation block by the grippers, and increases the movement efficiency. The movable member 520 of the present invention moves on the mounting table 510, which improves the stability of the movement of the incubation block. By providing the detection assembly to detect a real-time position of the movable member 520, the precision of the movement of the incubation block is improved.

In an embodiment, at least a part of the movable member 520 is located inside the elongated hole 5120, in the process in which the transmission mechanism drives the movable member 520 to move, at least a part of the movable member 520 moves in the elongated hole 5120, and a lengthwise direction of the elongated hole 5120 is consistent with a movement direction of the movable member 520. The elongated hole 5120 has a limiting function, so as to limit a movement range of the movable member 520.

It should be noted that the mounting table 510 in the present invention is a table surface, and a support base 5130 is provided below the mounting table 510, so as to achieve the technical effect of supporting the mounting table 510.

In the present embodiment, the sensing portion includes a first sensor 560 and a second sensor 570, wherein the first sensor 560 is arranged at an end of the mounting table 510, and along the lengthwise direction of the mounting table 510, the second sensor 570 and the first sensor 560 are spaced apart from each other.

In an embodiment, the first sensor 560 and the second sensor 570 spaced apart from each other are used to detect the position of the movable member 520, in which the first sensor 560 arranged at an end is used to detect whether the movable member 520 is at an initial position, and the second sensor 570 is used to detect a movement position of the movable member 520, i.e. an intermediate position. The means of the first sensor 560 and the second sensor 570 cooperating to detect the movable member 520 facilitates to improve the precision of the position of the movable member 520, so as to increase the movement efficiency.

In an embodiment, the first sensor 560 detects the initial position of the movable member 520, and when the movable member 520 is at the initial position, the inductive portion is in induction with the first sensor 560, so as to detect the position of the movable member 520; and when the movable member 520 moves from one end of the mounting table 510 to the other end, the inductive portion is in inductive fit with the second sensor 570 to detect the position of the movable member.

In an embodiment, one second sensor 570 is provided; In another embodiment, in order to improve the precision of detecting the movable member 520, a plurality of second sensors 570 are provided, and when a plurality of second sensors 570 are provided, the plurality of second sensors 570 are arranged at intervals along the lengthwise direction of the mounting table 510. The second sensors 570 arranged at intervals are in inductive fit with the inductive portion on the movable member 520 at different positions, so as to learn the position of the movable member 520 in real time, thereby improving the precision of the movement of the movable member 520.

In the present embodiment, the first sensor 560 and the second sensor 570 are both photoelectric sensors. When the movable member 520 is located at a first position, at least a part of the inductive portion on the movable member 520 blocks the first sensor 560, such that the first sensor 560 detects whether the movable member is located at an end position of the mounting table 510. During the movement of the movable member, the inductive portion on the movable member 520 is in inductive fit with the second sensor 570, to detect the position of the movable member 520 during the movement.

As shown in Figs. 10 to 13, the inductive portion includes a blocking piece 540, and a first protruding structure 5410 and a second protruding structure 5420 are provided on the blocking piece 540; and along the lengthwise direction of the mounting table 510, the first protruding structure 5410 is provided at an end part of the blocking piece 540, the first protruding structure 5410 is in inductive fit with the first sensor 560, the second protruding structure 5420 is spaced apart from the first protruding structure 5410, and the second protruding structure 5420 is inductive fit with the second sensor 570.

In an embodiment, the blocking piece 540 is provided on a side surface of the movable member 520, and the blocking piece 540 extends along the movement direction of the movable member 520, i.e. extending along the lengthwise direction of the mounting table 510; wherein when the movable member 520 moves to the end position of the mounting table 510, that is, when the movable member 520 is at the initial position, the first protruding structure 5410 at the end part blocks the first sensor 560, such that the first sensor 560 detects that the movable member 520 is at the initial position.

In an embodiment, during the movement of the movable member 520, the second protruding structure 5420 blocks the second sensor 570, so as to detect the position of the movable member 520 by the second sensor 570.

In an embodiment, one second protruding structure 5420 is provided, in another embodiment, a plurality of second protruding structures are provided, and when a plurality of second protruding structures 5420 are provided, the plurality of second protruding structures 5420 are provided at intervals along the lengthwise direction of the blocking piece 540, and the arrangement of the plurality of second protruding structures 5420 is able to improve the precision of detection.

It should be noted that the photoelectric sensors are through-beam photoelectric sensors.

As shown in Figs. 10 to 13, the transmission mechanism includes a driving member 5310 and a transmission member, wherein the driving member 5310 is mounted on the mounting table 510, the driving member 5310 is in drive connection with the transmission member, and the movable member 520 is connected to the transmission member, such that the driving member 5310 drives the transmission member to act, and the transmission member drives the movable member 520 to move.

In one embodiment of the present embodiment, the transmission member is a lead screw, the driving member 5310 drives the lead screw to rotate, the movable member 520 is in threaded fit with the lead screw, and by rotation of the lead screw, the movable member 520 is driven to move along an axial direction of the lead screw.

In another embodiment of the present embodiment, the transmission member includes a driving pulley, a driven pulley 5330 and a synchronous belt 5320, wherein the driving member 5310 is mounted on the mounting table 510, the driving member 5310 is in drive connection with the driving pulley, the driven pulley 5330 is movably connected to the mounting table 510, the driving pulley is in drive connection with the driven pulley 5330 by the synchronous belt 5320, and at least a part of the movable member 520 is connected to the synchronous belt 5320.

In an embodiment, the driving member 5310 drives the driving pulley to rotate, the driving pulley drives, by the synchronous belt 5320, the driven pulley 5330 to rotate, and at least a part of the movable member 520 is locked with the synchronous belt 5320, such that in the process of movement of the synchronous belt 5320, the movable member 520 is driven to move.

In an embodiment, the movable member 520 may be clamped on the synchronous belt 5320 to implement synchronous movement of the movable member 520 and the synchronous belt 5320, or the movable member 520 is connected to the synchronous belt 5320 by using a fastener to implement synchronous movement of the synchronous belt 5320 and the movable member 520.

In an embodiment, the driving pulley and the driven pulley are of gear structures, an inner wall of the synchronous belt 5320 is provided with a structure of protruding tooth 5331, and rotational connection is achieved by meshing the structure of protruding tooth 5331 with the gear structures.

In an embodiment, the driving member 5310 is a motor, and the motor rotates to drive the driving pulley to rotate.

It should be noted that in order to detect the transmission stability of the driving member 5310 and the synchronous belt 5320, the detection assembly further includes an encoder 580, wherein the encoder 580 is arranged on the mounting table 510, and an input shaft of the encoder 580 is in drive connection with the driving pulley and/or the driven pulley 5330.

The encoder 580 measures angular displacement of the driving pulley and the driven pulley 5330. The incubation driving assembly of the present invention further includes a controller, wherein the first sensor 560, the second sensor 570 and the encoder 580 of the detection assembly are all in signal connection with the controller, such that the controller compares a movement distance of the movable member 520 measured by the first sensor 560 and the second sensor 570 and the angular displacement of the pulleys, so as to judge whether the motor is out of synchronization, and detect the stability and precision of the movement of the movable member 520.

In an embodiment, the detection assembly further includes a gear sensor 590, wherein the gear sensor 590 is arranged on the mounting table 510, the driving pulley is provided with a protruding tooth 5331, the protruding tooth 5331 extends in a radial direction away from the pulley center of the driving pulley, and the gear sensor 590 is in inductive fit with the protruding tooth 5331 so as to measure the rotational speed of the protruding tooth 5331 via the gear sensor 590, thereby measuring the rotational speed of the driving pulley. One protruding tooth 5331 or a plurality of protruding teeth may be provided.

In another embodiment, a protruding tooth 5331 is provided on the driven pulley 5330, the protruding tooth 5331 extends in a radial direction away from the pulley center of the driven pulley 5330, and the gear sensor 590 is in inductive fit with the protruding tooth 5331 so as to measure the rotational speed of the protruding tooth 5331 via the gear sensor 590, thereby measuring the rotational speed of driven pulley 5330. One protruding tooth 5331 or a plurality of protruding teeth may be provided.

It should be noted that the gear sensor 590 is a through-beam photoelectric sensor. During the rotation of the protruding tooth 5331 along with the driving pulley or the driven pulley 5330, when the protruding tooth 5331 rotates to block an optical path of the photoelectric sensor, the photoelectric sensor sends a detection signal to the controller.

In the present embodiment, the incubation driving assembly further includes a mounting frame 550, wherein the mounting frame 550 is mounted on the mounting table 510, the mounting frame 550 is provided with a through hole, the through hole extends along the lengthwise direction of the mounting table 510, the driving member 5310 is mounted on the mounting frame 550, and an output end of an output shaft of the driving member 5310 passes through the through hole and is connected to the driving pulley.

The driving member 5310 and the driving pulley form a whole, which is able to move along a lengthwise direction of the through hole, such that when the synchronous belt 5320 is slackened, the problem that the synchronous belt 5320 is slackened is solved by moving the positions of the driving member 5310 and the driving pulley.

It should be noted that the driving member 5310 and the mounting frame 550 are connected by a fastener, such as a screw. When the position of the driving member 5310 needs to be moved, the screw is removed; and when the driving member moves to a preset position, the driving member 5310 is positioned by using the screw.

As shown in Figs. 10 to 13, the mounting table 510 is provided with a first sliding member 5110 extending along the lengthwise direction of the mounting table 510, the movable member 520 is provided with a second sliding member 5221; one of the first sliding member 5110 and the second sliding member 5221 is a sliding groove, and the other of the first sliding member 5110 and the second sliding member 5221 is a sliding rail, and the sliding rail is slidably connected to the sliding groove.

In an embodiment, the cooperation between the sliding groove and the sliding rail achieves linear sliding of the movable member 520 on the mounting table 510, wherein the sliding rail has the technical effect of guiding, and is beneficial to improving the stability and precision of the movement of the movable member 520.

In an embodiment, a plurality of first sliding members 5110 and a plurality of second sliding members 5221 may be provided, to disperse the gravity of the incubation block on the movable member 520, i.e. preventing stress concentration.

In the present embodiment, the transmission mechanism and the movable member 520 are arranged in a vertical direction, so as to improve the space utilization of the whole device.

As shown in Figs. 10 to 13, the transmission mechanism is provided at a bottom end of the mounting table 510, and the movable member 520 includes a main body portion 5210 and a connecting portion 5220; wherein the main body portion 5210 is movably mounted on a top end of the mounting table 510, one end of the connecting portion 5220 is connected to the main body portion 5210, and the other end of the connecting portion 5220 passes through the elongated hole 5120 and is connected to the transmission mechanism.

In an embodiment, the top end of the mounting table 510 is an upper part, the bottom end of the mounting table 510 is a lower part, the incubation block is mounted on the main body portion 5210, and the connecting portion 5220 is fixedly connected to the synchronous belt 5320, so as to achieve synchronous movement with the synchronous belt 5320.

In an embodiment, a part of the connecting portion 5220 reciprocates in the elongated hole 5120 along the lengthwise direction of the elongated hole 5120, that is, by controlling the rotation direction of the output shaft of the driving member 5310, the synchronous belt 5320 is able to drive the movement direction of the connecting portion 5220, thereby controlling the movement direction of the incubation block.

In order to solve the problem in the related art that a wiring manner of joint connection of a fixed incubation block is not applicable to a movable incubation block, the present invention provides a movable incubation assembly.

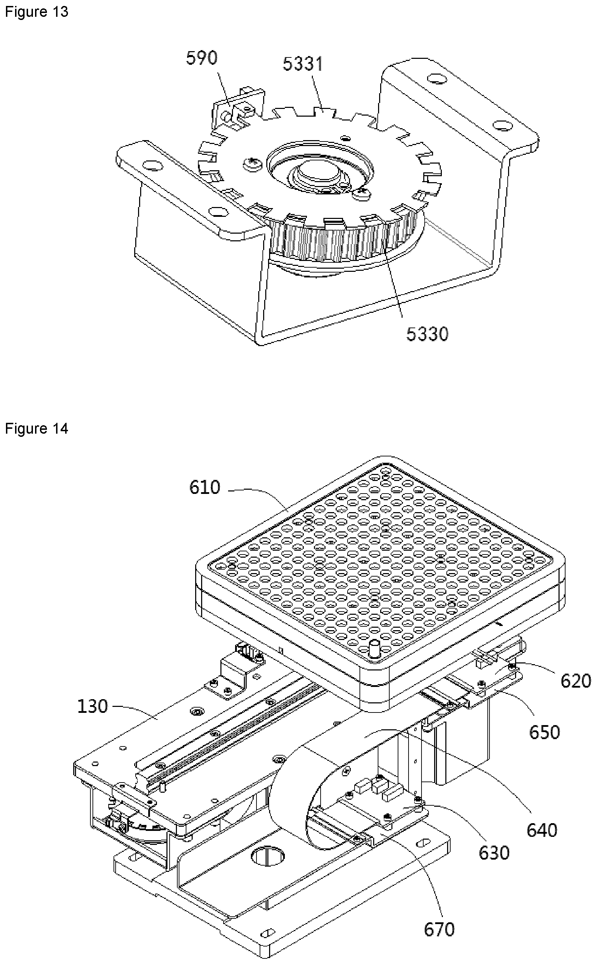

As shown in Figs. 14 to 16, the movable incubation assembly is connected to a moving block of the incubation driving assembly 130, and drives, by the moving block, the movable incubation assembly to move in a preset direction, and the movable incubation assembly includes a carrying structure 610, a first main control board 620, a second main control board 630 and an FPC electrical connection structure 640; wherein the carrying structure 610 has a plurality of incubation positions, and each of the plurality of incubation positions is configured for placing a reaction container; the first main control board 620 is configured for being connected to the moving block or the carrying structure 610, such that the first main control board 620 moves together with the moving block or the carrying structure 610 along the preset direction; the second main control board 630 is connected to the incubation driving assembly 130; and two ends of the FPC electrical connection structure 640 are electrically connected to the first main control board 620 and the second main control board 630, respectively.

The present invention provides a movable incubation assembly having an FPC electrical connection structure 640, in this way, two ends of the FPC electrical connection structure 640 are electrically connected to the first main control board 620 and the second main control board 630, respectively; moreover, the first main control board 620 is configured for being connected to the moving block or the carrying structure 610, such that the first main control board 620 moves together with the moving block or the carrying structure 610 along the preset direction, and the second main control board 630 is connected to the incubation driving assembly 130, which fully utilizes the light weight, thin thickness and high bending resistance performance of the FPC electrical connection structure 640, thereby facilitating the reduction of the wiring difficulty of the movable incubation assembly, and also ensuring the reliability of the electrical connection between the FPC electrical connection structure 640 and the first main control board 620 and the second main control board 630.

It should be noted that, in the present invention, in order to ensure the incubation reliability and the movement reliability of the movable incubation assembly, optionally, the length of the FPC electrical connection structure 640 is greater than or equal to the movement stroke of the carrying structure 610 along the preset direction. In this way, it is ensured that the FPC electrical connection structure 640 is bent and deformed along with the movement of the carrying structure 610 along the preset direction, but interference or even breakage will not occur.

It should be noted that, in the present invention, the FPC specifically refers to a flexible printed circuit, i.e. a flexible printed circuit board, or simply a flexible board, which is a flexible printed circuit board made of polyimide or polyester thin film as a substrate.

It should be noted that, in the present invention, in order to ensure the layout regularity of the movable incubation assembly and ensure the reliability of the movement of the FPC electrical connection structure 640 along with the carrying structure 610, the first main control board 620 and the second main control board 630 are located at the same side of the carrying structure 610. In this way, the FPC electrical connection structure 640 is prevented from interfering with a reaction container located on the carrying structure 610 during bending and deformation, thereby ensuring the placement reliability of the reaction container.

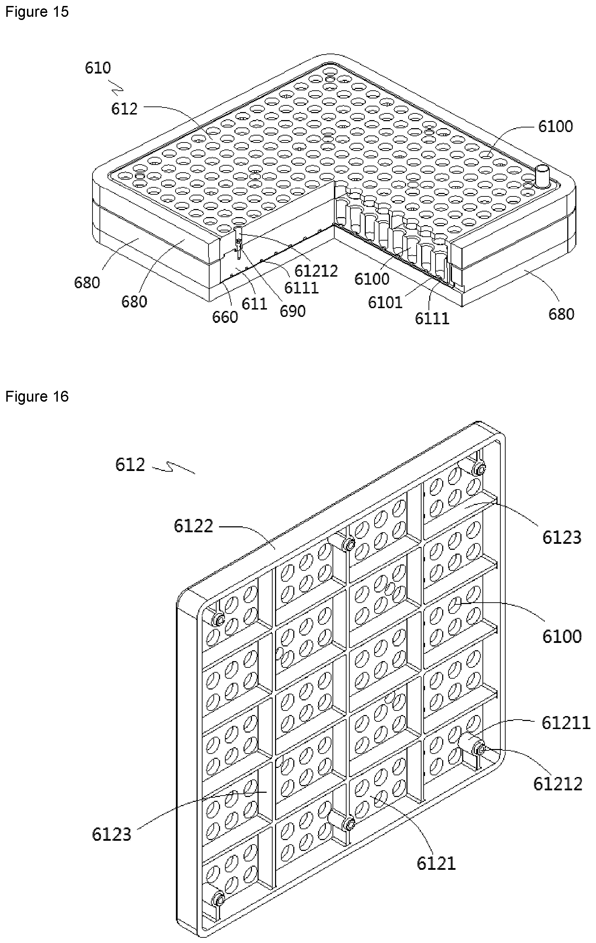

As shown in Fig. 15, the movable incubation assembly further includes a first mounting plate 650, wherein the first mounting plate 650 is configured for being connected to the moving block, the first mounting plate 650 has a first support surface, and the first main control board 620 is provided on the first support surface. In this way, while the reliability of connection between the first mounting plate 650 and the moving block is ensured, the reliability of mounting of the first main control board 620 by the first mounting plate 650 is able to also be ensured.

It should be noted that, in the present invention, as shown in Fig. 14, the movable incubation assembly further includes a second mounting plate 670, wherein the second mounting plate 670 is configured for being connected to the incubation driving assembly, the second mounting plate 670 has a second support surface, and the second main control board 630 is arranged on the second support surface. In this way, while the reliability of connection between the second mounting plate 670 and the incubation driving assembly is ensured, the reliability of mounting of the second main control board 630 by the second mounting plate 670 is able to also be ensured.

It should be noted that in the present invention, in order to ensure convenient electrical connection between the two ends of the FPC electrical connection structure 640 and the first main control board 620 and the second main control board 630, optionally, a first end of the FPC electrical connection structure 640 is in plug-in fit with the first main control board 620; and/or a second end of the FPC electrical connection structure 640 is in plug-in fit with the second main control board 630.

It should be noted that in the present invention, the first main control board 620 is a PCB main control board, and definitely, the second main control board 630 may also be a PCB main control board.

As shown in Fig. 15, the movable incubation assembly includes: a heating structure 660, wherein the heating structure 660 is connected to the carrying structure 610 and configured to heat the reaction container at each of the plurality of incubation positions, and the heating structure 660 is electrically connected to the first main control board 620, and the second main control board 630 is electrically connected to an external power supply. In this way, the arrangement of the first mounting plate 650 is able to shunt the current of two power lines conveyed from the outside to copper wire current of N FPC electrical connection structures 640 for transmission, then, the current is converged into the current of the two power lines, for heating the heating structure 660 of the movable incubation assembly, and the heating structure 660 serves to heat the reaction container, thereby ensuring the reaction reliability of reactants in the reaction container.

It should be noted that in the present invention, the heating structure 660 is located on a bottom surface of the carrying structure 610. In this way, the reliability of heating the reaction container at the incubation position by the heating structure 660 is ensured.

Of course, in an embodiment not shown in the figures of the present invention, the heating structure 660 is located on an outer peripheral surface of the carrying structure 610. In this way, it is ensured that the heating structure 660 is able to cover the carrying structure 610 as far as possible, thereby effectively heating the reaction container located at the incubation position on the carrying structure 610.

It should be noted that, in the present invention, the carrying structure 610 includes a plurality of sub-carrying plates; each sub-carrying plate is provided with a plurality of limiting holes 6100, and the limiting holes 6100 located at the same position on each sub-carrying plate are concentrically arranged, so as to form an incubation position for carrying a reaction container. In this way, by configuring the carrying structure 610 to be a structure form including a plurality of sub-carrying plates, the carrying structure 610 is a layered structure, which helps to reduce the overall weight of the carrying structure 610, and also reduce the processing and manufacturing costs of the carrying structure 610.

As shown in Figs. 14 to 16, the plurality of sub-carrying plates include a first sub-carrying plate 611 and a second sub-carrying plate 612, wherein a plurality of limiting holes 6100 are provided on the first sub-carrying plate 611, and the plurality of limiting holes 6100 are distributed in a matrix; and the second sub-carrying plate 612 includes a plate body 6121, an enclosure plate 6122 and a plurality of support rib plates 6123, wherein the plate body 6121 is provided with a plurality of limiting holes 6100, and the well depth of the limiting holes 6100 on the plate body 6121 is smaller than the depth of the limiting holes 6100 on the first sub-carrying plate 611; the enclosure plate 6122 is connected to an outer periphery of the plate body 6121 to enclose a mounting space, and the mounting space faces one side of the first sub-carrying plate 611; and the plurality of support rib plates 6123 are arranged at intervals in the mounting space, and two sides of each support rib plate 6123 are respectively connected to the plate body 6121 and the first sub-carrying plate 611, to form a hollow structure therebetween. In this way, by configuring the plurality of sub-carrying plates as a structure form including the first sub-carrying plate 611 and the second sub-carrying plate 612, and by configuring the second sub-carrying plate 612 as a structure form including a plate body 6121, an enclosure plate 6122 and a plurality of support rib plates 6123, it is ensured that a hollow structure is able to be formed between the first sub-carrying plate 611 and the second sub-carrying plate 612, thereby greatly reducing the overall weight of the carrying structure 610, thus facilitating the lightweight design of the movable incubation assembly, and solving the problem of a relatively large load caused by a relatively large weight of a movable incubation assembly in high-throughput tests, wherein the test throughput may be understood as a test speed of reactants such as a sample and a reagent.

It should be noted that, in the present invention, the first sub-carrying plate 611 is located below the second sub-carrying plate 612, and the limiting holes 6100 on the first sub-carrying plate 611 are mainly configured for heating while limiting the reaction container, and the limiting holes 6100 on the second sub-carrying plate 612 are mainly configured for limiting and supporting the reaction container, so as to prevent the reaction container from shaking during the movement of the movable incubation assembly.

In an embodiment, the first sub-carrying plate 611 is made of an aluminum material, and the second sub-carrying plate 612 is made of a PET material.

As shown in Fig. 15, the surface of the side of the plate body 6121 facing the first sub-carrying plate 611 is provided with assembling posts 61211 in a protruding manner, and assembling holes 61212 are formed in the assembling posts 61211. The movable incubation assembly further includes fasteners 690, wherein the fasteners 690 pass through the assembling holes 61212 and are connected to the first sub-carrying plate 611, such that the first sub-carrying plate 611 and the second sub-carrying plate 612 are able to be fixedly connected, thereby ensuring the connection reliability of the first sub-carrying plate 611 and the second sub-carrying plate 612.

Of course, there are a plurality of assembling posts 61211, the plurality of assembling posts 61211 are arranged at intervals, and there are a plurality of fasteners 690, and the plurality of fasteners 690 are arranged in one-to-one correspondence with the plurality of assembling posts 61211, and thus it is ensured that there are a plurality of connection points between the first sub-carrying plate 611 and the second sub-carrying plate 612, thereby ensuring the stability of the connection between the two.

As shown in Fig. 15, vent grooves 6111 are provided on the first sub-carrying plate 611, communicating holes 6101 are provided below the limiting holes 6100 on the first sub-carrying plate 611, and the communicating holes 6101 are configured for communicating the limiting holes 6100 with the vent grooves 6111. In this way, when a reaction container is placed at an incubation position, air is discharged through the communicating hole 6101 and the vent groove 6111 below the limiting hole 6100, thereby ensuring that the reaction container is able to be placed at the incubation position smoothly.

As shown in Fig. 15, the movable incubation assembly further includes a housing 680, wherein the housing 680 has an accommodating groove, the carrying structure 610 is provided in the accommodating groove, and the heating structure 660 is located below the carrying structure 610 (of course, the heating structure may also be provided at an outer peripheral side of the carrying structure 610).

It should be noted that in the present invention, the housing 680 is made of thermal insulation cotton, and the thermal insulation cotton is able to achieve a heat insulation function.

It should be noted that in the present invention, the movable incubation assembly further includes a temperature sensor and a temperature protection switch, wherein the temperature sensor is electrically connected to the heating structure 660, and the temperature sensor is configured for monitoring a heating temperature of the heating structure 660 in real time; moreover, the temperature protection switch is electrically connected to the temperature sensor, and the temperature protection switch controls, according to temperature information of the heating structure 660 acquired by the temperature sensor, whether the heating structure 660 continues to perform heating. If the temperature reaches an incubation temperature, the temperature protection switch controls the heating structure 660 to stop heating, so as to ensure that the temperature at the incubation position is able to be always within an incubation temperature range, thereby ensuring the incubation reliability of the movable incubation assembly.

From the description above, it can be determined that the embodiments above of the present invention achieve the following technical effects:
1. the problem in the related art of poor use performance of sample analysis apparatus is effectively solved; and
2. a simple structure and stable performance are achieved.

The content above merely relates to embodiments of the present invention, and is not intended to limit the present invention. For a person skilled in the art, the present invention may have various modifications and changes. Any modifications, equivalent replacements, improvements and the like made within the spirit and principle of the present invention shall all fall within the scope of protection of the present invention.

## Claims

1. An automatic sample analysis apparatus, comprising: a sample addition disc (50), and a sample unit (60), a reaction cup feeding unit (70), a reagent unit (80) and a gripper unit (90) respectively arranged around the sample addition disc (50), wherein the gripper unit (90) comprises at least two linear grippers and a guide rail, and the at least two linear grippers move linearly along the guide rail; and the automatic sample analysis apparatus further comprises an incubation unit (100), a photometric unit (200) and a cleaning unit (300), and the incubation unit (100), the photometric unit (200) and the cleaning unit (300) are all located on a motion trajectory of the gripper unit (90).

2. The automatic sample analysis apparatus as claimed in claim 1, wherein the photometric unit (200) is located between the incubation unit (100) and the cleaning unit (300).

3. The automatic sample analysis apparatus as claimed in claim 2, wherein the sample addition disc (50) is located on a motion trajectory of the gripper unit (90).

4. The automatic sample analysis apparatus as claimed in claim 1, wherein the sample addition disc (50) has a plurality of cup positions, and the plurality of cup positions are arranged at intervals around an axial direction of the sample addition disc (50); and the sample unit (60), the reaction cup feeding unit (70), the reagent unit (80) and the gripper unit (90) respectively cooperate with different cup positions of the plurality of cup positions on the sample addition disc (50).

5. The automatic sample analysis apparatus as claimed in claim 1, wherein the sample unit (60) comprises a sample needle system (63), and the sample needle system (63) is located upstream of the reaction cup feeding unit (70) in a rotation direction of the sample addition disc (50); and in the rotation direction of the sample addition disc (50), a position where the sample needle system (63) cooperates with the sample addition disc (50) is located downstream of a position where the reaction cup feeding unit (70) cooperates with the sample addition disc (50).

6. The automatic sample analysis apparatus as claimed in claim 1, wherein the gripper unit (90) is located above the incubation unit (100) in a vertical direction, and in a rotation direction of the sample addition disc (50), a position where the gripper unit (90) cooperates with the sample addition disc (50) is located downstream of a position where the reagent unit (80) cooperates with the sample addition disc (50).

7. The automatic sample analysis apparatus as claimed in claim 1, wherein two linear grippers of the at least two linear grippers are able to transfer a reaction cup between any two of the sample addition disc (50), the incubation unit (100), the photometric unit (200) and the cleaning unit (300).

8. The automatic sample analysis apparatus as claimed in claim 1, wherein the reagent unit (80) is located downstream of the reaction cup feeding unit (70), and in a rotation direction of the sample addition disc (50), a position where the reagent unit (80) cooperates with the sample addition disc (50) is located downstream of a position where the sample unit (60) cooperates with the sample addition disc (50).

9. The automatic sample analysis apparatus as claimed in claim 1, wherein the reagent unit (80) comprises reagent discs (81) and reagent needles (82) cooperating with each other, wherein a number of the reagent discs (81) and a number of the reagent needles (82) are both two, and the reagent discs and the reagent needles are in one-to-one correspondence; two of the reagent discs (81) are symmetrically arranged with respect to the sample addition disc (50), and two of the reagent needles (82) are symmetrically arranged with respect to the sample addition disc (50); and the reagent needles (82) move between the reagent discs (81) and the sample addition disc (50), and the two of the reagent needles (82) alternately match a same cup position of the sample addition disc (50).

10. The automatic sample analysis apparatus as claimed in claim 5, wherein the automatic sample analysis apparatus further comprises a dilution device (400), and the dilution device (400) is located on a motion trajectory of the sample needle system (63).

11. The automatic sample analysis apparatus as claimed in claim 10, wherein the dilution device (400) is located on a motion trajectory of the gripper unit (90).

12. The automatic sample analysis apparatus as claimed in claim 11, wherein the dilution device (400) is movable between the sample needle system (63) and the gripper unit (90), and respectively cooperates with the sample needle system (63) and the gripper unit (90).

13. The automatic sample analysis apparatus as claimed in claim 1, wherein the reaction cup feeding unit (70) comprises:
- a reaction cup feed bin (71);
- a transfer disc (72), wherein the transfer disc (72) is connected to the reaction cup feed bin (71), and the reaction cup feed bin (71) conveys a reaction cup to the transfer disc (72); and
- a feeding gripper (73), the feeding gripper (73) moving between the transfer disc (72) and the sample addition disc (50).

14. The automatic sample analysis apparatus as claimed in any one of claims 1 to 13, wherein the incubation unit (100) is able to move along a direction perpendicular to a motion trajectory of the gripper unit (90).

15. The automatic sample analysis apparatus as claimed in any one of claims 1 to 13, wherein the automatic sample analysis apparatus further comprises a sample scheduling system (61) and a transmission track (62), wherein the transmission track (62) is connected to the sample scheduling system (61), and the transmission track (62) is configured for conveying a sample of the sample scheduling system (61); and the sample unit (60) comprises a sample needle system (63), and the sample needle system (63) moves between the transmission track (62) and the sample addition disc (50) and is configured for conveying a sample.

16. The automatic sample analysis apparatus as claimed in any one of claims 1 to 13, wherein the incubation unit (100) comprises an incubation driving assembly (130) and a movable incubation assembly; the movable incubation assembly being connected to a moving block of the incubation driving assembly (130), and driving, by the moving block, the movable incubation assembly to move in a preset direction; and the movable incubation assembly comprises:
- a carrying structure (610), wherein the carrying structure (610) has a plurality of incubation positions, and each of the plurality of incubation positions is configured for placing a reaction container;
- a first main control board (620), wherein the first main control board (620) is configured for being connected to the moving block or the carrying structure (610), such that the first main control board (620) moves together with the moving block or the carrying structure (610) along the preset direction;
- a second main control board (630), the second main control board (630) being connected to the incubation driving assembly (130); and
- an FPC electrical connection structure (640), two ends of the FPC electrical connection structure (640) being electrically connected to the first main control board (620) and the second main control board (630), respectively.

17. The automatic sample analysis apparatus as claimed in claim 16, wherein the automatic sample analysis apparatus comprises:
a heating structure (660), wherein the heating structure (660) is connected to the carrying structure (610) and configured to heat a reaction container at each of the plurality of incubation positions, and the heating structure (660) is electrically connected to the first main control board (620), and the second main control board (630) is electrically connected to an external power supply.

18. The automatic sample analysis apparatus as claimed in claim 17, wherein
the heating structure (660) is located on a bottom surface of the carrying structure (610); and
the heating structure (660) is located on an outer peripheral surface of the carrying structure (610).

19. The automatic sample analysis apparatus as claimed in claim 16, wherein the first main control board (620) and the second main control board (630) are located at a same side of the carrying structure (610).

20. The automatic sample analysis apparatus as claimed in claim 16, wherein the automatic sample analysis apparatus further comprises:
- a first mounting plate (650), wherein the first mounting plate (650) is configured for being connected to the moving block, the first mounting plate (650) having a first support surface, and the first main control board (620) is provided on the first support surface; and
- a second mounting plate (670), wherein the second mounting plate (670) is configured for being connected to the incubation driving assembly (130), the second mounting plate (670) having a second support surface, and the second main control board (630) is provided on the second support surface.
